# EUROPEAN PATENT SPECIFICATION

(11) **EP 4 079 162 B1**
(45) Date of publication and mention of the grant of the patent: **02.08.2023**
(21) Application number: 21170200.6
(22) Date of filing: 23.04.2021
(51) Int. Cl.: A23K 10/30, A23L 3/3508, A23K 30/15, A23L 3/358, A23K 10/12

(54) **SILAGE ADDITIVE PREPARATION TO SUPPRESS UNDESIRED BACTERIAL MICROORGANISMS**
SILAGE-ADDITIVZUBEREITUNG ZUR UNTERDRÜCKUNG UNERWÜNSCHTER BAKTERIELLER MIKROORGANISMEN
PRÉPARATION D'ADDITIF D'ENSILAGE POUR ÉLIMINER DES MICRO-ORGANISMES BACTÉRIENS INDÉSIRABLES

(43) Date of publication of application: 26.10.2022
(73) Proprietor: KONSIL Europe GmbH, 06108 Halle (Saale) (DE)
(72) Inventor: Auerbach, Horst, 06108 Halle (Saale) (DE)
(74) Representative: Michalski Hüttermann & Partner Patentanwälte mbB

(56) References cited:
- WO-A1-2009/034091
- DE-A1- 4 112 866
- GB-A- 1 291 837
- GB-A- 1 483 340
- US-A- 3 801 338
- US-A- 4 079 150

## Description

The invention relates to a silage additive as well as a method for ensiling forage.

Silage is produced from various forages. Most often, grasses and legumes (clover, lucerne, beans, peas, vetches) are ensiled, as well as silage from whole-crop corn and corn ear products (high-moisture corn, HMC, corn-cob-mox, CCM, snaplage) and whole-crop cereals. A distinction is made between a phase of storage in the absence of air (fermentation) until the silo is opened (regardless of the type of silo) and a phase that inevitably follows after the silo is opened in the presence of air during silo emptying for feeding (which can last for weeks or months, depending on the silo dimensions or silage quantity and the livestock to be fed).

Until about the end of the 80's, pure or partially buffered formic acid (FA) was the benchmark until the development of Cekafusil (Chemiekombinat Bitterfeld), a product of 245 g/kg sodium nitrite (NaNO₂) and 165 g/kg hexamethylene tetramine (sometimes referred to as hexamine), which was not at all corrosive to skin, eyes, metal, because of its nature as a salt solution (pH 8-10). This solution is still marketed today and is certainly by far the best studied (>140 trials) silage additive. In these trials, comparisons with pure FA, showed the same efficacy. It has been found that there is basically no difference between 3 liters per ton Cekafusil (application of 1500 g active ingredients per ton of forage) and 4 liters per ton FA (85%) (4080 g of active ingredient per ton of forage). The effect is based on the two different active ingredients acting at different times of the fermentation process. NaNO₂ acts in the early fermentation phase (until approximately 2 weeks maximum) either directly through the molecule or through microbial conversion to NOₓ, which are further reduced to NH₃. After spontaneous onset of natural lactic acid fermentation by epiphytic lactic acid bacteria present on the forage (NaNO₂ at the concentration used has no inhibitory effect on lactic acid bacteria that enter the silo with the forage), the pH decreases so that formaldehyde and NH₃ are released from the hexamethylene tetramine. The NH₃ remains in the silo and formaldehyde immediately binds to bacterial cell surfaces, preventing germination and multiplication of *Clostridium* spores that may have survived the attack of NaNO₂.

In principle, there are two problems in silage production that occur, but almost never together: undesired fermentations under anaerobic conditions by mainly butyric acid-forming and protein-degrading clostridia during storage of the silage in the silo OR by yeasts/molds under aerobic conditions after opening the silos during feed-out. Most recently developed silage additives have been found quite ineffective in targeting clostridia.

Also, hexamethylene tetramine (sometimes also named hexamine) has been used in silage additives in the past. However, it has been found harmful and food regulations for animals disfavor hexamethylene tetramine in many countries.

WO2011100956A2 describes a silage additive for the treatment of un-crushed beets.

WO2009034091A1 describes a silage additive for forage.

DE4034749A1 describes a combination preparation and process for acidifying green forage and preventing aerobic degradation processes in fermented forage using lactic acid bacteria and formate. Nitrites are not used.

DD300627A5 describes a silage additive comprising nitrite and formate as well as hexamethylene tetramine and C₂-C₆ carboxylic acid salts, applied at an extremely high dosage of minimum 5 liters per ton forage.

US4079150A describes an ensiling agent for fodder plants and a method of fermentating fodder plants.

DE4112866A1 describes a process to inhibit the growth of listeria in fodder.

GB1291837A describes the treatment of hay and straw to inhibit undesirable deterioration.

GB1483340A describes a liquid silage additive.Woolford suggests in his publications that hexamethylene tetramine has a pronounced inhibitory effect (*in vitro* MIC tests) on clostridia, which is 10 times stronger than that of formate (Woolford, M., J. Sci. Food Agric. 1975, 26, 219 - 228; Woolford, M. J. Sci. Food Agric. 1975, 26, 229 - 237; hexamethylene tetramine 0.14 g/l MIC, 2.3 g/l formic acid equivalent MIC, both measured at pH 5).

The problem according to the present invention is to provide a silage additive that is specifically targeting clostridia and that can nevertheless avoid the use of hexamethylene tetramine against the prejudice in the public domain.

In a first embodiment, the problem according to the present invention is solved by a silage additive comprising:
a) 40 to 90 wt.% nitrite,
b) 10 to 60 wt.% ammonium or sodium formate,
characterized in that it comprises less than 2 wt.% of hexamethylene tetramine.

The high content of nitrite in comparison with the prior art allows for smaller dosage applied to the forage due to the higher content of active ingredient against clostridia. Surprisingly it was found that hexamethylene tetramine can be replaced by formate, and optionally additional active substances, without loss in performance.

The silage additive may comprise more nitrite than formate by weight. Preferably, the ratio of nitrite to formate is in a range 1.1:1 to 3:1, most preferably 1.3:1 to 2.5:1.

The content of nitrite may be in a range from 50 to 80 wt.%. The nitrite may be ammonium nitrite, potassium nitrite or sodium nitrite. However, sodium nitrite is most preferred.

The content of formate may be in a range from 15 to 50 wt.%. The formate may be ammonium formate, potassium formate or sodium formate. However, sodium formate or ammonium formate is most preferred.

Preferably, the nitrite is sodium nitrite.

The silage additive may additionally comprise 1 to 5 wt.% sorbate. The sorbate may be sodium sorbate, potassium sorbate or ammonium sorbate. However, the sorbate preferably is potassium sorbate.

The silage additive may additionally comprise 1 to 5 wt.% benzoate. The benzoate may be sodium benzoate, potassium benzoate or ammonium benzoate. However, the benzoate preferably is sodium benzoate.

Preferably, the silage additive either comprises sorbate but no benzoate or on the other hand benzoate but no sorbate.

Preferably, the silage additive comprises less than 3 wt.% propionic acid or propionate, most preferred no propionic acid or propionate.

Preferably, the silage additive comprises less than 3 wt.% lactic acid or salts thereof, most preferred no lactic acid.

Preferably, the silage additive comprises no hexamethylene tetramine.

Preferably, the silage additive comprises less than 3 wt.% tetraformate, most preferred no tetraformate.

Preferably, the silage additive comprises less than 3 wt.% fatty acids or salts thereof, most preferred no fatty acids.

Preferably, the silage additive comprises less than 3 wt.% glycerin, most preferred no glycerin.

Preferably, the silage additive comprises less than 3 wt.% formamides, most preferred no formamides.

Preferably, the silage additive comprises less than 3 wt.% free acid or salts thereof, most preferred no free acid.

A combination of nitrite and ammonium or sodium formate can be used to inhibit the growth of clostridia. Clostridia can develop especially at low dry matter (DM) content in high-protein forages. Preferably, this combination is not used for ensiling beets because clostridia cannot grow in this rapidly-fermenting substrate reaching pH levels, which do not support clostridia development very quickly.

In a further embodiment, the problem according to the present invention is solved by a method of ensiling forage comprising the step of adding the silage additive according to the present invention to forage in an amount from 200 to 1500 g per ton of forage, preferably in an amount from 300 to 1200 g per ton of forage.

The silage additive may be added as an aqueous solution.

The aqueous solution may comprise 200 to 450 g of the silage additive per liter of water.

The aqueous solution of the silage additive may be added to the forage in an amount of 1 to 3 liters per ton of forage. This results in lower costs and lower quantities to be shipped and handled.

The forage used in the method may preferably be green herbage and/or green forage.

The method may be applied to silage stored not only in plastic bags, but also in tower silos and horizontal silos, including walled bunkers, clamps, drive-over pits.

The waiting time between covering of the silo and opening of the silo may be in a range from 2 to 8 weeks, depending on the moisture level at ensiling, in the method according to the present invention.

### Examples

Further practical embodiments and advantages of the invention are described below in the figure and examples:

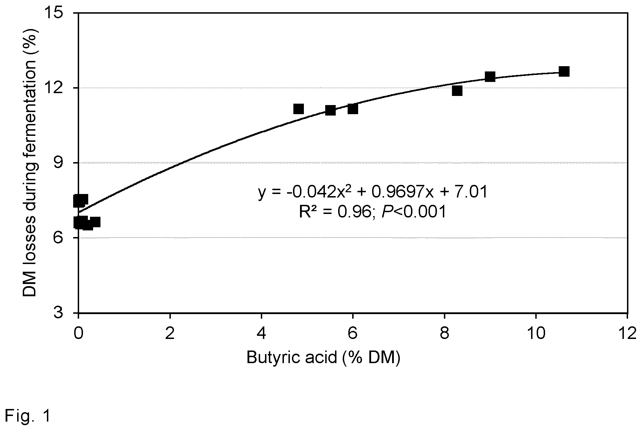

- Figure 1:: Relationship between the concentration of butyric acid in silage made from lucerne and cocksfoot (n=24, Auerbach et al., 2016) and dry matter (DM) losses during fermentation

Figure 1 shows the relationship between the concentration of butyric acid in silage made from lucerne and cocksfoot (n=24, Auerbach et al., 2016) and the dry matter losses during fermentation.

### Comparative Examples and General Background

Quantitative (Borreani et al., 2018, J. Dairy Sci., 101:3952-3979, doi: 10.3168/jds.2017-13837) and qualitative losses (Borreani et al., 2018, J. Dairy Sci., 101:3952-3979, doi: 10.3168/jds.2017-13837; Auerbach and Nadeau, 2020, Agronomy, 10, 1229-; doi:10.3390/agronomy10091229) in silage production from a range of forages from field through storage in the silo and subsequent feed-out until intake by the ruminant significantly affect intake and animal performance, and thus farm profitability. Of all metabolic pathways facilitated by undesired silage microorganisms, those resulting in butyric acid formation and protein degradation by clostridia and in ethanol formation by yeasts are the most prominent causes associated with the highest DM losses during anaerobic storage (Figure 1, where DM means Dry Matter). As reviewed by Rooke and Hatfield (2003), Silage Science and Technology, Number 42 in the series Agronomy, American Society of Agronomy, Inc., Madison, WI, USA, pages 95-140, the efficiency of the silage fermentation process is negatively affected by yeast and clostridia activity, as reflected by DM recovery of as low as 51% (yeast metabolism) and 66% (clostridia metabolism), respectively, when glucose is used as a substrate.

### Comparative Examples: Comparison formic acid vs. NaNO₂/Hexamethylene tetramine (Cekafusil/KOFASIL LIQUID/Xtrasil classic, all 245 g/kg NaNO₂ and 165 g/kg Hexamethylene tetramine, or 300 a/L NaNO₂/200 g/L, density 1.23 kg/L or 1.23 g/cm³)

An aqueous silage additive was formed by adding the mentioned components (typically given in g of component per kg of solution) to water and forming a solution. This solution was then added to and mixed with forage (typically given in liters of silage additive per ton of forage in L/t), which was then subsequently ensiled.
- Results of numerous trials on a wide range of temperate forages (Table 1) showed that 3 L/t (liters of silage additive per ton of forage) of non-corrosive blend of NaNO₂ (300 g/L) and Hexamethylene tetramine (200 g/L), giving a total of 1500 g of active ingredients per ton of forage, were as equally effective against clostridia as pure, corrosive formic acid (85%) applied at 4 L/t (=4.080 g/t, density: 1.20 g/cm³).
- Results on tropical grass (Table 2) showed the same effect as on temperate forages (University of Maringa, Brazil, as cited by Auerbach and Nadeau, 2019, Proceedings of the VI International Symposium on Forage Quality and Conservation, November, 6-7, 2019, Piracicaba, Brazil, pages 49-88, ISSN: 2175-4624).
- Conclusion: NaNO₂/Hexamethylene tetramine as equally effective as pure formic acid (85%) but with better handling properties (not corrosive on eye, skin, metal) and at lower application rate of total active ingredients (1500 g/t for combi NaNO₂/Hexamethylene tetramine and 4080 g/t pure formic acid).

**Table 1. shows the effects of chemical additives on dry matter (DM) losses during fermentation, butyric acid production and clostridia counts (Weiss-bach, 2010a, as cited by Auerbach and Nadeau, 2019, Proceedings of the VI International Symposium on Forage Quality and Conservation, November, 6-7, 2019, Piracicaba, Brazil, pages 49-88, ISSN: 2175-4624).**

| Parameter | Control | Nitrite/Hexamethylene tetramine¹ (3 l/t) | Formic acid (85%) (4 l/t) |
|---|---|---|---|
| DM loss² (%) | 11.0 | 7.1* | 6.2* |
| Frequency of silages with low DM losses³ (%) | 28 | 70* | 73* |
| Butyric acid content (% fresh matter)² | 1.17 | 0.35* | 0.45* |
| Frequency of butyric acid-free-silages⁴(%) | 27 | 74* | 67* |
| Proportion of silages with low spore counts⁵ (%) | 44 | 71* | 43 |

| | | | |
|---|---|---|---|
| ¹containing sodium nitrite (300 g/L) and hexamethylene tetramine (200 g/L); ²n=363, ³DM loss ≤ 8%, n=291; ⁴butyric acid < 0.2% of fresh matter (FM);⁵≤ 1,000 clostridia (MPN)/g, n=75; *denotes significant differences of treatment vs. control at P< 0.05. | | | |

**Table 2 shows the effects of additives on fermentation and dry matter (DM) losses of tropical grass (Panicum maximum cv. Mombaça) (University of Maringá, Paraná, Brazil, unpublished).**

| Item | Control | Soybean hulls' | Sodium nitrite² | Sodium nitrite + Hexamethylene tetramine³ | Formic acid⁴ | SEM | P value |
|---|---|---|---|---|---|---|---|
| pH | 4.60^{bc} | 4.89^{a} | 4.66^{b} | 4.79^{ab} | 4.44^{c} | 0.053 | <0.01 |
| DM loss, % | 15.8^{a} | 12.9^{b} | 9.2^{c} | 6.5^{d} | 7.1^{d} | 0.07 | <0.01 |
| Lactic acid (% of DM) | 0.20^{c} | 0.92^{bc} | 1.72^{b} | 2.99^{a} | 3.71^{a} | 0.323 | <0.01 |
| NH₃-N (% of DM) | 0.26^{a} | 0.24^{a} | 0.21^{a} | 0.22^{a} | 0.13^{b} | 0.014 | <0.01 |
| NH₃-N (% of DM)⁵ | 0.26^{a} | 0.24^{a} | 0.17^{b} | 0.09^{c} | 0.13^{bc} | 0.014 | <0.01 |

| | | | | | | | |
|---|---|---|---|---|---|---|---|
| ¹100 kg/t; ²1 kg/t; ³1 kg/t sodium nitrite + 0.65 kg/t hexamethylene tetramine; ⁴85%, 4 L/t; ⁵corrected for addition of nitrogen by additives. | | | | | | | |

### Example 1

Replacement of hexamethylene tetraminehexamethylene tetramine by other actives, which are not degraded during fermentation and are not volatile (e.g. formate, sorbate, benzoate):
Auerbach et al. (2016), 17th International Congress on Forage Conservation, 27-29 September 2017, Stary Smokovec, High Tatras, pages 116-117

**Table 3 shows the fermentability of forages (lucerne, Medicago sativa; cocksfoot, Dactylis glomerata) prior to ensiling (Means of 3 replicates ± standard deviation in brackets).**

| Forage species | DM¹ | CP² | CF³ | CA⁴ | WSC⁵ | BC⁶ | FC⁷ |
|---|---|---|---|---|---|---|---|
| | (g/kg) | (g kg/DM) | | | | | |
| Lucerne | 231 | 244 | 251 | 182 | 42 | 102 | 26 |
| | (0.4) | (5.3) | (8.9) | (6.6) | (0.9) | (3.5) | (0.6) |
| Cocksfoot | 200 | 187 | 274 | 132 | 40 | 99 | 23 |
| | (3.0) | (9.6) | (7.1) | (2.3) | (13.6) | (2.7) | (0.9) |

| | | | | | | | |
|---|---|---|---|---|---|---|---|
| ¹dry matter; ²crude protein; ³crude fibre; ⁴crude ash; ⁵water-soluble carbohydrates; ⁶buffering capacity, g lactic acid/kg DM; ⁷fementability coefficient=DM+8*WSC/BC | | | | | | | |

Forage evaluation regarding fermentability: both forages were very difficult to ensile (high risk of clostridia development) according to German Agricultural Society (DLG) (2018): DLG Testing Guidelines for the award and use of the DLG Quality Mark for ensiling agents. To be cited as: DLG TestService GmbH., 2018. "DLG Testing Guidelines for the award and use of the DLG Quality Mark for ensiling agents":
- difficult to ensile: FC<35
- moderately difficult to easy to ensile forages in the lower range of dry matter content: FC≥35, DM<35%
- moderately difficult to easy to ensile forages in the lower range of dry matter content: FC≥35, DM ≥ 35 to ≤50%

| Treatment | DML¹ | pH | NH₃-N² | LA³ | AA⁴ | BA⁵ | EtOH 6 | Bam⁷ |
|---|---|---|---|---|---|---|---|---|
| **Lucerne (*Medicago sativa*)** | | | | | | | | |
| no additive | 12.3^{a} | 6.23^{a} | 36.0^{a} | 1.6^{b} | 34.0 | 93.0^{a} | 11.0^{a} | 6.4^{a} |
| XC | 6.6^{b} | 4.88^{b} | 12.6^{b} | 74.1^{a} | 39.0 | 2.0^{b} | 5.7^{b} | 2.4^{b} |
| XFS | 6.6^{b} | 4.84^{b} | 13.1^{b} | 74.6^{a} | 35.5 | 0.6^{b} | 5.9^{b} | 2.4^{b} |
| XFB | 6.6^{b} | 4.85^{b} | 13.5^{b} | 71.8^{a} | 35.7 | 0.2^{b} | 5.4^{b} | 2.4^{b} |
| SEM | 0.12 | 0.047 | 1.58 | 2.18 | 1.70 | 3.49 | 0.52 | 0.39 |
| Significance | *** | *** | *** | *** | ns | *** | *** | *** |
| **Cocksfoot (*Dactylis glomerata*)** | | | | | | | | |

### Results of Example 1

An aqueous silage additive was formed by adding the mentioned components (typically given in g of component per kg of solution) to water and forming a solution. This solution was then added to and mixed with forage (typically given in liters of silage additive per ton of forage in L/t), which was subsequently ensiled.

The following tables show DM (dry matter) losses, reflecting the efficiency of the fermentation process, fermentation pattern, protein degradation and formation of biogenic amines.

**Table 4 shows the effects of chemical silage additives containing sodium nitrite in combination with either hexamethylene tetramine (XC), ammonium formate/potassium sorbate (XFS) or sodium formate/sodium benzoate on the fermentation and biogenic amine production in lucerne and cocksfoot silage stored for >300 days (Auerbach et al., 2016).**

| | | | | | | | | |
|---|---|---|---|---|---|---|---|---|
| no additive | 11.1^{a} | 5.85^{a} | 23.0^{a} | 2.1^{b} | 18.1^{b} | 54.4^{a} | 10.2^{b} | 14.1^{a} |
| XC | 7.5^{b} | 5.00^{b} | 11.9^{b} | 39.7^{a} | 33.2^{a} | 0.1^{b} | 12.6^{a} | 2.3^{b} |
| XFS | 7.5^{b} | 4.94^{b} | 14.2^{b} | 37.7^{a} | 36.6^{a} | 0.5^{b} | 11.1^{ab} | 2.0^{b} |
| XFB | 7.5^{b} | 4.90^{b} | 14.8^{b} | 38.9^{a} | 36.7^{a} | 0^{b} | 11.2^{ab} | 2.6^{b} |
| SEM | 0.03 | 0.097 | 0.19 | 0.84 | 1.15 | 1.72 | 0.37 | 0.50 |
| Significance | *** | *** | *** | *** | *** | *** | * | *** |

| | | | | | | | | |
|---|---|---|---|---|---|---|---|---|
| ¹dry matter losses during fermentation, %; ²% of total-N, corrected for the addition of N by the additives; ³lactic acid, g/kg DM; ⁴acetic acid, g/kg DM; ⁵sum of n- and iso-buytric acids, n- and iso-valeric acids and n-caproic acid, g/kg DM; ⁶ethanol, g/kg DM; ⁷total biogenic amines comprised of putrescin, cadaverin, histamine, phenylethylamine and tyramine, g/kg DM; values in columns within forage species bearing different superscripts differ at *P*<0.05 (Tukey's test); **P*<0.05, ***P*<0.01, ****P*<0.001, ns not significant. XC: comparative example (positive control = benchmark), Xtrasil classic (composition 245 g/kg NaNO₂, 165 g/kg Hexamethylene tetramine) XFS: composition 245 g/kg NaNO₂, 100 g/kg ammonium formate, 20 g/kg potassium sorbate XFB: composition 245 g/kg NaNO₂, 67 g/kg sodium formate, 33 g/kg sodium benzoate | | | | | | | | |

Conclusions from Table 4:
- all chemical additives reduced DM losses and protein degradation and improved silage fermentation quality when compared with untreated silage
- no difference in performance between NaNO₂/hexamethylene tetramine and other additives regarding all tested traits, therefore statement permitted that hexamethylene tetramine can be replaced by formate/sorbate or formate/benzoate at very similar application rates of total active ingredients

### Example 2

Comparison between NaNO₂ (245 g/kg) / hexamethylene tetramine (165 g/kg) (XC) applied at 3 L/t and compositions covered by the claims of the invention:
- XFS 245 g/kg NaNO₂ + 100 g/kg ammonium formate + 20 g/kg potassium sorbate
- XFB 245 g/kg NaNO₂ + 67 g/kg sodium formate + 33 g/kg sodium benzoate

The following conditions were used:
- 7 trials using grasses, lucerne, early-cut rye and a mix of oats and lucerne,
- fermentation length >90 days

**Table 5 shows the effects of chemical silage additives containing sodium nitrite (245 g/kg) in combination with either hexamethylene tetramine (165 g/kg) (XC), ammonium formate (100 g/kg) and potassium sorbate (20 g/kg) (XFS), or sodium formate (67 g/kg) and 33 g/kg sodium benzoate (XFB), applied at 2 L/t, on dry matter (DM) losses during fermentation in silage made from grasses, early-cut rye, lucerne or an oats/lucerne mixture stored for >90 days (Least-square means (LSmeans) of 3 replicates per treatment, standard error of mean given in brackets). Meta-analysis of 7 trials.**

| Treatment | DM loss during fermentation (%) |
|---|---|
| no additive | 6.1 (0.22) |
| XC | 4.8 (0.22) |
| XFB | 4.9 (0.22) |
| XFS | 5.0 (0.23) |
| Contrasts no additive *vs.* XC | *Statistical significance* |
| | *P*<0.001 |
| no additive *vs.* XFB | *P*<0.001 |
| no additive *vs.* XFS | *P*<0.001 |
| XC *vs.* XFB | not significant (*P*>0.05) |
| XC *vs.* XFS | not significant (*P*>0.05) |
| XFB *vs.* XFS | not significant (*P*>0.05) |

Conclusions from Table 5:
- all chemical additives reduced DM losses when compared with untreated silage
- no statistically significant differences between NaNO₂/hexamethylene tetramine and other additives. Therefore, the statement is permitted that hexamethylene tetramine can be replaced by formate/sorbate or formate/benzoate at very similar application rate of total active ingredients or even lower than XC because density is higher than that of XFB/XFS, 1.23 g/cm³ vs. about 1.20 g/cm³ for both inventions
- For comparison - concentration of total active ingredients:
   ∘ XC: 410 g/kg
   ∘ XFB: 345 g/kg
   ∘ XFS: 365 g/kg.

### Example 3

This example is a comparison between NaNO₂ (245 g/kg) / hexamethylene tetramine (165 g/kg) applied at 3 L/t and a formula covered by the claims of the invention (composition 245 g/kg NaNO₂+100 g/kg sodium formate + 20 g/kg potassium sorbate) at ensiling, wilted forages with low DM content and very high ash concentration (ash reflects level of contamination with soil where clostridia spores are to be found), thus high risk of clostridia contamination of forages
- permanent grassland classified as difficult to ensile (FC<35), early cut rye classified as moderately difficult to easy to ensile forages in the lower range of dry matter content: FC≥35, DM<35%

**Table 6 shows the fermentability of forages (permanent grassland mainly composed of Lolium species; early-cut rye, Secale cereale) prior to ensiling (Means of 3 replicates ± standard deviation in brackets).**

| Forage species | DM¹ | CP² | CF³ | CA⁴ | WSC⁵ | BC⁶ | FC⁷ |
|---|---|---|---|---|---|---|---|
| | (g/kg) | (g kg/DM) | | | | | |
| Permanent grassland | 228 | 244 | 240 | 182 | 67 | 48 | 34 |
| | (1.2) | (5.3) | (7.0) | (4.1) | (6.4) | (0.8) | (1.3) |
| Early-cut rye | 228 | 168 | 239 | 202 | 85 | 44 | 38 |
| | (3.6) | (4.2) | (3.9) | (10.4) | (2.7) | (0.4) | (0.9) |

| | | | | | | | |
|---|---|---|---|---|---|---|---|
| ¹dry matter; ²crude protein; ³crude fibre; ⁴crude ash; ⁵water-soluble carbohydrates; ⁶buffering capacity, g lactic acid/kg DM; ⁷fementability coefficient=DM+8*WSC/BC | | | | | | | |

**Table 7 shows the effects of chemical silage additives containing sodium nitrite (245 g/kg) in combination with either hexamethylene tetramine (165 g/kg) (XC) or sodium formate (100 g/kg) and potassium sorbate (20 g/kg) (XFS), applied at different application rates, on dry matter (DM) losses during fermentation in silage made from permanent grassland and early-cut rye stored for >90 days (Least-square means of 3 replicates treatment).**

| Trial | Treatment (application rate) | DM loss during fermentation (%) |
|---|---|---|
| Permanent grassland | no additive | 7.5^{a} |
| (DM at ensiling: 228 g/kg) | XC (2 L/t) | 4.5^{b} |
| | XC (3 L/t) | 5.0^{b} |
| | XFS (2 L/t) | 4.5^{b} |
| | XFS (3 L/t) | 4.6^{b} |
| | Standard error of mean | 0.129 |
| | P value | <0.001 |
| Early-cut rye | no additive | 4.8^{a} |
| (DM at ensiling: 228 g/kg) | XC (2 L/t) | 4.2^{b} |
| | XC (3 L/t) | 4.2^{b} |
| | XFS (2 L/t) | 3.9^{c} |
| | XFS (3 L/t) | 3.8^{c} |
| | Standard error of mean | 0.002 |
| | P value | <0.001 |

| | | |
|---|---|---|
| ^{a-c}Least-square means within trial bearing unlike superscripts differ at *P*<0.05 (procedure GLM of SAS, version 9.4, Cary, NC, USA; Tukey's test) | | |

Conclusions from these 2 examples in table 7:
- when compared with no additive (untreated), dry matter losses reduced by all additives regardless of application rate
- XFS is at least as good as XC, thereby further substantiating the assumption that hexamethylene tetramine can be replaced by formate/sorbate

The features of the invention disclosed in the present description, in the drawings as well as in the claims may be essential, both individually and in any combination, for the realization of the invention in its various embodiments. The invention is not limited to the embodiments described. It may be varied within the scope of the claims and with due regard to the knowledge of the person skilled in the art.

## Claims

1. Silage additive comprising:
a. 40 to 90 wt.% nitrite,
b. 10 to 60 wt.% ammonium or sodium formate,
**characterized in that** it comprises less than 2 wt.% of hexamethylene tetramine.

2. Silage additive according to claim 1, **characterized in that** the content of nitrite is in a range from 40 to 80 wt.%.

3. Silage additive according to any of the previous claims, **characterized in that** it comprises more nitrite than formate by weight.

4. Silage additive according to any of the previous claims, **characterized in that** it additionally comprises 1 to 5 wt.% sorbate.

5. Silage additive according to any of the previous claims, **characterized in that** it additionally comprises 1 to 5 wt.% benzoate.

6. Silage additive according to any of the previous claims, **characterized in that** the nitrite is sodium nitrite.

7. Method of ensiling forage comprising the step of adding the silage additive according to any of claims 1 to 6 to forage in an amount from 200 to 1500 g per ton of forage.

8. Method according to claim 7, **characterized in that** the silage additive is added as an aqueous solution.

9. Method according to claim 8, **characterized in that** the aqueous solution comprises 200 to 450 g of the silage additive per liter of water.

10. Method according to claim 8 or 9, **characterized in that** the aqueous solution of the silage additive is added to the forage in an amount of 1 to 3 liters per ton of forage.

## Patentansprüche

1. Silageadditiv, das Folgendes umfasst:
a. 40 bis 90 Gew.-% Nitrit,
b. 10 bis 60 Gew.-% Ammonium- oder Natriumformiat,
**dadurch gekennzeichnet, dass** es weniger als 2 Gew.-% Hexamethylentetramin umfasst.

2. Silageadditiv nach Anspruch 1, **dadurch gekennzeichnet, dass** der Nitritgehalt in einem Bereich von 40 bis 80 Gew.-% liegt.

3. Silageadditiv nach einem der vorherigen Ansprüche, **dadurch gekennzeichnet, dass** es, bezogen auf das Gewicht, mehr Nitrit als Formiat umfasst.

4. Silageadditiv nach einem der vorherigen Ansprüche, **dadurch gekennzeichnet, dass** es darüber hinaus 1 bis 5 Gew.-% Sorbat umfasst.

5. Silageadditiv nach einem der vorherigen Ansprüche, **dadurch gekennzeichnet, dass** es darüber hinaus 1 bis 5 Gew.-% Benzoat umfasst.

6. Silageadditiv nach einem der vorherigen Ansprüche, **dadurch gekennzeichnet, dass** es sich beim Nitrit um Natriumnitrit handelt.

7. Verfahren zum Silieren von Grundfutter, das den Schritt des Hinzufügens des Silageadditivs nach einem der Ansprüche 1 bis 6 zu Grundfutter in einer Menge von 200 bis 1500 g pro Tonne Grundfutter umfasst.

8. Verfahren nach Anspruch 7, **dadurch gekennzeichnet, dass** das Silageadditiv als wässrige Lösung zugegeben wird.

9. Verfahren nach Anspruch 8, **dadurch gekennzeichnet, dass** die wässrige Lösung 200 bis 450 g des Silageadditivs pro Liter Wasser umfasst.

10. Verfahren nach Anspruch 8 oder 9, **dadurch gekennzeichnet, dass** die wässrige Lösung des Silageadditivs in einer Menge von 1 bis 3 Liter pro Tonne Grundfutter zum Grundfutter gegeben wird.

## Revendications

1. Additif d'ensilage comprenant :
a. 40 à 90 %pds de nitrite,
b. 10 à 60 %pds d'ammonium ou de formate de sodium,
**caractérisé en ce qu'**il comprend moins de 2 %pds d'hexaméthylène-tétramine.

2. Additif d'ensilage selon la revendication 1, **caractérisé en ce que** le contenu de nitrite est dans la plage de 40 à 80 %pds.

3. Additif d'ensilage selon l'une quelconque des revendications précédentes, **caractérisé en ce qu'**il comprend plus de nitrite que de formate en poids.

4. Additif d'ensilage selon l'une quelconque des revendications précédentes, **caractérisé en ce qu'**il comprend en outre 1 à 5 %pds de sorbate.

5. Additif d'ensilage selon l'une quelconque des revendications précédentes, **caractérisé en ce qu'**il comprend en outre 1 à 5 %pds de benzoate.

6. Additif d'ensilage selon l'une quelconque des revendications précédentes, **caractérisé en ce que** le nitrite est le nitrite de sodium.

7. Procédé d'ensilage de fourrage comprenant une étape d'ajout de l'additif d'ensilage selon l'une quelconque des revendications 1 à 6 à du fourrage dans une quantité de 200 à 1500 g par tonne de fourrage.

8. Procédé selon la revendication 7, **caractérisé en ce que** l'additif d'ensilage est ajouté en tant que solution aqueuse.

9. Procédé selon la revendication 8, **caractérisé en ce que** la solution aqueuse comprend de 200 à 450 g d'additif d'ensilage par litre d'eau.

10. Procédé selon la revendication 8 ou 9, **caractérisé en ce que** la solution aqueuse de l'additif d'ensilage est ajoutée au fourrage dans une quantité de 1 à 3 litres par tonne de fourrage.
